**Europäisches Patentamt**

**European Patent Office**

**Office européen des brevets**

(19)

(11) Veröffentlichungsnummer: **0 206 094**
**B1**

(12)

# EUROPÄISCHE PATENTSCHRIFT

(45) Veröffentlichungstag der Patentschrift:
28.12.88

(51) Int. Cl.⁴: **B 65 G 67/60**, B 65 G 53/24

(21) Anmeldenummer: **86107887.1**

(22) Anmeldetag: **10.06.86**

(54) Saugheber.

(30) Priorität: **26.06.85 DE 3522841**

(43) Veröffentlichungstag der Anmeldung:
**30.12.86 Patentblatt 86/52**

(45) Bekanntmachung des Hinweises auf die Patenterteilung:
**28.12.88 Patentblatt 88/52**

(84) Benannte Vertragsstaaten:
**AT BE CH DE FR GB IT LI NL SE**

(56) Entgegenhaltungen:
DE-A- 2 157 602
DE-A- 2 253 060
DE-A- 3 034 465

(73) Patentinhaber: **Bühler-MIAG GmbH,
Ernst-Amme-Strasse 19, D-3300 Braunschweig (DE)**

(72) Erfinder: **Wiersdorff, Dieter, Dipl.-Ing., Mühlenweg 11,
D-3174 Meine (DE)**
Erfinder: **Heckel, Hans, Emil-Berg-Strasse 7,
D-3302 Cremlingen (DE)**
Erfinder: **Rüsch, Friedrich-Wilhelm, Dipl.-Ing.,
Billrothstrasse 5, D-3300 Braunschweig (DE)**
Erfinder: **Bohm, Arturo, Dipl.-Ing. ETH,
Schlattralnstrasse 16, CH-9242 Oberuzwil (CH)**
Erfinder: **Zimmermann, René, Dipl.-Ing. ETH, Hüseren,
CH-9523 Züberwangen (CH)**
Erfinder: **Scheiwiller, Thomas, Dipl.-Ing. ETH,
Langweidstrasse 12, CH-9013 St. Gallen (CH)**

**Beschreibung**

Die Erfindung bezieht sich auf einen Saugheber für den Umschlag von Schüttgütern, insbesondere zur Entladung von Schiffen, mit einem an einem Tragwerk in lotrechter Ebene schwenkbar gelagerten, durch Zugmittel geführten Ausleger mit einem Saugrohr und einem um seine Längsachse drehbar gelagerten, vorzugsweise zylindrischen Behälter für die zeitweise Aufnahme des Schüttgutes, wobei der Behälter vermittels mit ihm verbundener Krafteinleitungselemente gleichzeitig Tragwerk für den Ausleger und ein an der diesem abgewandten Seite des Behälters angeordnetes Maschinenhaus als Gegengewicht ist.

Ein Saugheber dieser Art ist aus der DE-AS 2 253 060 bekannt. Indessen bilden hier Ausleger und Saugrohr eine Einheit, die mittels eines entsprechend gekrümmten Flansches an die Behälterwandung angeschweisst ist. Gleichfalls nur an einer Stelle mit der Wandung des Behälters bzw. des Rezipienten fest verbunden und durch eine zusätzliche Strebe an der Behälterwand abgefangen ist ein dem Ausleger bzw. Saugrohr gegenüberliegender Fachwerkausleger, auf dem ein Sauggebläse und ein Motor in der gleichzeitigen Funktion eines Gegengewichtes angeordnet sind. Es ist erkennbar, dass mit dieser Bauweise weitgehend punktuelle Krafteinleitungen in die Behälterwandung verbunden sind, die sich aus Gewichts- und Festigkeitsgründen nicht beliebig erhöhen lassen. Hinzu kommt, dass die Krafteinleitung in die Behälterwandung in drei verschiedenen Ebenen erfolgt, was zu unerwünschten Biegemomenten führt bzw. die statische Berechnung erschwert, und auch die Montage erscheint insbesondere hinsichtlich des Fachwerkauslegers aus heutiger Sicht zu aufwendig. Insgesamt gesehen dürfte die Konzeption des Saughebers gemäss der DE-AS 2 253 060 allenfalls für kleinere Anlagen in Frage kommen.

Ein weiterer gattungsgemässer Saugheber ist aus der DE-OS 2 917 052 bekannt. Hier ist der Behälter im wesentlichen in seinem oberen Bereich mit einer Vielzahl sich in seiner Längsrichtung erstreckender und über den Behälterkopf hinausragender Profilträger verschweisst, die in einer Verbindungskonstruktion das Schwenklager für den Ausleger bilden. Die Schwenkachse des Auslegers befindet sich mithin oberhalb des Rezipienten in der Verlängerung seiner Mittellängsachse und damit in relativ grosser Höhe über der Hafenpier, was an sich keinen Vorteil erkennen lässt. Weiterhin werden auch die Kräfte für das Schwenken bzw. Halten des Auslegers über Schwenkzylinder in die Profilträger und damit letztlich in den Rezipienten eingeleitet, allerdings an einer tiefer gelegenen Stelle, wo sie zum Teil auch als Querkräfte wirken. Ferner bildet der Behälter auch das Tragwerk für einen Maschinenraum; dieser befindet sich jedoch weit unterhalb der Auslegerebene, kurz oberhalb der Drehverbindung für den Behälter, und dürfte ebenfalls — jedenfalls zum Teil — die Funktion eines Gegengewichtes für den wirksamen Teil des Auslegers ausüben. Soweit erkennbar, ist der Maschinenraum fest mit dem Behälter verbunden. Insgesamt erscheint diese Konstruktion recht material- und arbeitsaufwendig sowie zudem unnötig kopflastig und nicht eben besonders formschön, wobei auch hier aufgrund der vielfältigen und höhenversetzten Krafteinleitungen in den Behälter dessen statische Beanspruchung u.a. durch Biegemomente recht komplex und die Berechnung entsprechend aufwendig sowie für jede Anlagenvariante neu erforderlich sein dürfte. Nicht vernachlässigbar erscheinen auch die aufgrund des grossen Abstandes zwischen Ausleger und Drehlager des Behälters an letzterem auftretenden Torsionskräfte. Über allem steht die grundsätzliche Anfälligkeit solcher als Rezipient und damit unter Unterdruck arbeitender Behälter für Deformationen durch von aussen angreifende Kräfte.

Bei einem weiteren, nur bedingt gattungsgemässen Saugheber gemäss der DE-OS 1 937 084 ist lediglich der Ausleger am Rezipienten abgestützt, wobei, soweit erkennbar, etwa tangential an einem Kragen des Rezipienten angeordnete Träger Verwendung finden, während ein Gegengewicht in Form eines Maschinenraums o.ä. nicht erkennbar ist. Hieraus resultiert eine einseitige Belastung des Rezipienten durch den Ausleger, und es bleibt offen, wo und auf welche Weise das Auslegerende kräftemässig abgefangen ist. Bei einer anderen, u.a. aufgrund der nicht drehbaren Anordnung des Rezipienten nur entfernt vergleichbaren, aus der Zeitschrift «Aufbereitungs-Technik», Nr. 10/1967, Seite 565, Bild 13 und 14 bekannten saugpneumatischen Schiffsentleerungseinrichtung geschieht dies de facto mittels eines gesonderten landseitigen Stützgerüstes, das auch den Rezipienten in seiner senkrechten Position hält. Ein derartiges Gerüst bedeutet einen erheblichen zusätzlichen konstruktiven und baulichen Aufwand und stellt zudem eine in der Regel unerwünschte Gewichtsbelastung für die Hafenpier dar.

Der Erfindung liegt die Aufgabe zugrunde, unter Verzicht auf zusätzliche Fachwerkskonstruktionen die Tragwerksfunktion des Rezipienten bzw. Behälters bei Saughebern dahingehend zu verbessern, dass statisch schwierig erfass- bzw. beherrschbare punktuelle und/oder über die Höhe des Behälters verteilte Krafteinleitungen vermieden werden und statt dessen alle aus dem Ausleger und dem Maschinenhaus bzw. Gegengewicht resultierenden Kräfte unter gegenseitiger Kompensation der horizontalen Kraftkomponenten durch Bildung eines sogenannten Kraftknotens in den Behälter eingeleitet werden.

Gemäss der Erfindung ist diese Aufgabe dadurch gelöst, dass die Krafteinleitungselemente in einem einzigen, in einem senkrechten Teilbereich die Wandung des Behälters auf ihrem gesamten Umfang einbeziehenden Verbindungselement zusammengefasst sind, bei dem die Anlenkpunkte für den Ausleger und das seinerseits nach Art eines Auslegers ausgebildete Maschinenhaus in ein und derselben waagerechten Ebene liegen und die Zugmittel für den Ausleger sowie Abspannmittel für das Maschinenhaus über einen sich senkrecht nach oben erstreckenden Fortsatz des Behälters geführt sind.

Die mit der Erfindung erreichten Vorteile liegen im wesentlichen darin, dass durch das Verbindungselement eine gleichmässige, definierte Belastung des Behälters als Tragwerk unter Neutralisierung der Horizontalkräfte gewährleistet ist. Weiterhin ist von grossem Vorteil, dass das Verbindungselement bei Variantenbildungen im Grundsatz beibehalten werden kann und nur Variationen im Bereich der geometrischen Ähnlichkeit erforderlich sind, während in solchen Fällen nach dem bisherigen Stand der Technik stets aufs neue umfangreiche statische Berechnungen und Zeichnungen erstellt werden mussten. Schliesslich ergeben sich durch die Erfindung auch gravierende Vorteile bei der Montage des Saughebers, insbesondere gegenüber früheren Ausführungen mit um den Behälter herumgebautem Maschinenhaus, indem dieses nunmehr als vorgefertigte Einheit angeliefert und in einfacher Weise in die entsprechenden Anlenkpunkte des Verbindungselementes eingehängt werden kann. Die Führung der Zugmittel für den Ausleger und der Abspannmittel für das Maschinenhaus über einen Behälterfortsatz gewährleistet eine saubere Einleitung der entsprechenden vertikalen Kraftkomponenten in die gesamte Wandungsfläche des Behälters, wobei der Fortsatz aus statischen Gründen bzw. zur besseren Kompensation von Windkräften auch nach oben kegelförmig verjüngt gestaltet sein kann. Schliesslich ergibt die im wesentlichen in einer Ebene liegende Aufeinanderfolge von Ausleger, Verbindungselement und Maschinenhaus einen klar gegliederten, auch ästhetisch ansprechenden Aufbau.

In weiterer zweckmässiger Ausgestaltung der Erfindung sind in das Verbindungselement im Bereich zwischen den Anlenkpunkten für den Ausleger eine Eintrittsöffnung für das Saugrohr und in die seitlichen Bereiche zwischen den jeweils einander gegenüberliegenden Anlenkpunkten für Ausleger und Maschinenhaus je eine Druckentlastungsöffnung für den Behälter integriert. Damit ist das generelle statische Problem der Anbringung von Öffnungen in solchen Unterdruckbehältern perfekt gelöst: Alle verfahrenstechnisch notwendigen Öffnungen sind ebenfalls im Bereich des für die Kraftaufnahme bzw. Krafteinleitung günstigen Verbindungselementes und noch dazu in der durch die Anlenkpunkte bestimmten Ebene konzentrisch, wodurch das Verbindungselement vollends zum zentralen Kraftknoten des Saughebers wird.

In zweckmässiger Weiterbildung der Erfindung besteht das Verbindungselement aus mindestens zwei zueinander parallelen, mit Durchtrittsöffnungen für den Behälter versehenen und längs derselben mit der Behälterwandung verschweissten, vorzugsweise rechteckigen Platten, zwischen die im Bereich ihrer Ecken Stegbleche zur Aufnahme der Anlenkpunkte für den Ausleger und das Maschinenhaus eingeschweisst sind. Dies ergibt einen überaus steifen, verwindungsfreien Verbund und insbesondere den Vorteil, dass die aus dem Ausleger und dem Maschinenhaus resultierenden Horizontalkräfte unter weitestgehender Umgehung der Behälterwandung im wesentlichen nur von den Platten aufgenommen werden und einander in diesen in im wesentlichen gerader Linie kompensieren.

In vorteilhafter Weise sind hierbei für jeden Anlenkpunkt des Auslegers zwei zueinander parallele Stegbleche unter Belassung durch sie begrenzter, auslegerseitig offener Aussparungen in den Platten vorgesehen, so dass quasi zwei gabelförmige Aufnahmen für die Auslegerenden gebildet werden.

Zwecks weiterer Erhöhung der Steifigkeit des Verbindungselementes sind ferner die Stegbleche an ihren dem Ausleger abgewandten Enden mit einem Quersteg verschweisst, der seinerseits mit den Platten und der Wandung des Behälters verschweisst ist.

Gemäss einem weiteren Erfindungsgedanken ist die Eintrittsöffnung für das Saugrohr als die Randbereiche der Platten durchdringender und mit diesen sowie der eine entsprechende Aussparung aufweisenden Behälterwandung verschweisster Rohrstutzen ausgebildet, wobei dieser einen ovalen Querschnitt aufweist, dessen Längsausdehnung sich in senkrechter Richtung erstreckt. Mit dieser Ausbildung wird die mit der Aussparung in der Behälterwandung an sich verbundene Schwächung derselben durch Krafteinleitung in einen festgefügten Verbund kompensiert, und der ovale Querschnitt des Rohrstutzens gestattet Schwenkbewegungen des Saugrohrs bei der Auf- und Abbewegung des Auslegers.

Die Abdichtung des mit dem Ausleger schwenkbaren Saugrohrs sowie die Einzelheiten des inneren Aufbaus des Behälters fallen nicht in den Bereich der vorliegenden Anmeldung. Entsprechende Lösungsvorschläge sind Gegenstände der älteren Anmeldungen DE-A-3 510 702.3 und DE-A-3 445 819.0 der Anmelderin.

Nach einer weiteren zweckmässigen Weiterbildung der Erfindung sind die Druckentlastungsöffnungen für den Behälter durch entsprechende Aussparungen der Behälterwandung einrahmende, mit dieser sowie den Platten verschweisste Verbindungsstege und die diese überdeckenden Randbereiche der Platten gebildet. Ausgehend von der Notwendigkeit, in einem Behälter dieser Art Druckentlastungsöffnungen mit im Normalfall geschlossenen Abdeckklappen für den Fall etwaiger Staubexplosionen vorsehen zu müssen, ist auch durch diese Weiterbildung der Erfindung die mit den entsprechenden Aussparungen in der Behälterwandung an sich verbundene Schwächung derselben durch Krafteinleitung in einen festgefügten Verbund kompensiert, der darüber hinaus — soweit es die Platten betrifft — schon aus anderen Gründen vorhanden ist und so mehrfach genutzt wird. Auch ergibt der durch die Verbindungsstege und die darüber und darunter liegenden Randbereiche der Platten gebildete Rahmen gute Voraussetzungen für die Anbringung der sogenannten Explosionsklappen sowie eine gute Richtcharakteristik für die gegebenenfalls austretende Explosionsdruckwelle. Aus Gleichgewichtsgründen versteht es sich, dass zwei einander gegenüberliegende Druckentlastungsöffnungen vorgesehen sind.

Schliesslich ist in einer weiteren zweckmässigen Ausgestaltung der Erfindung jeder Verbindungssteg zusätzlich mit mindestens einem Stegblech des ihm nächstgelegenen Anlenkpunktes fest verbunden, wobei in materialsparender vorteilhafter Weise diese zusätzliche feste Verbindung durch die zu diesem Zweck entsprechend verlängerten äusseren Stegbleche selbst gebildet ist. Hierdurch werden auch die Verbindungsstege in den Kraftfluss von einer Lageraufnahme für den Ausleger zu einer solchen für das Maschinenhaus einbezogen, was eine zusätzliche Sicherheit bedeutet bzw. eine günstigere Dimensionierung gestattet, auf jeden Fall aber einer weiteren Erhöhung der Verwindungssteifigkeit des Verbindungselementes dienlich ist.

Im folgenden wird die Erfindung anhand eines zeichnerisch dargestellten Ausführungsbeispiels näher erläutert.

Es zeigen:

Fig. 1 den erfindungsgemässen Saugheber in vereinfachter Darstellungsweise in Seitenansicht und

Fig. 2 einen Abschnitt des Behälters bzw. Rezipienten des Saughebers mit Verbindungselement in gegenüber der Figur 1 vergrösserter, perspektivischer Darstellung.

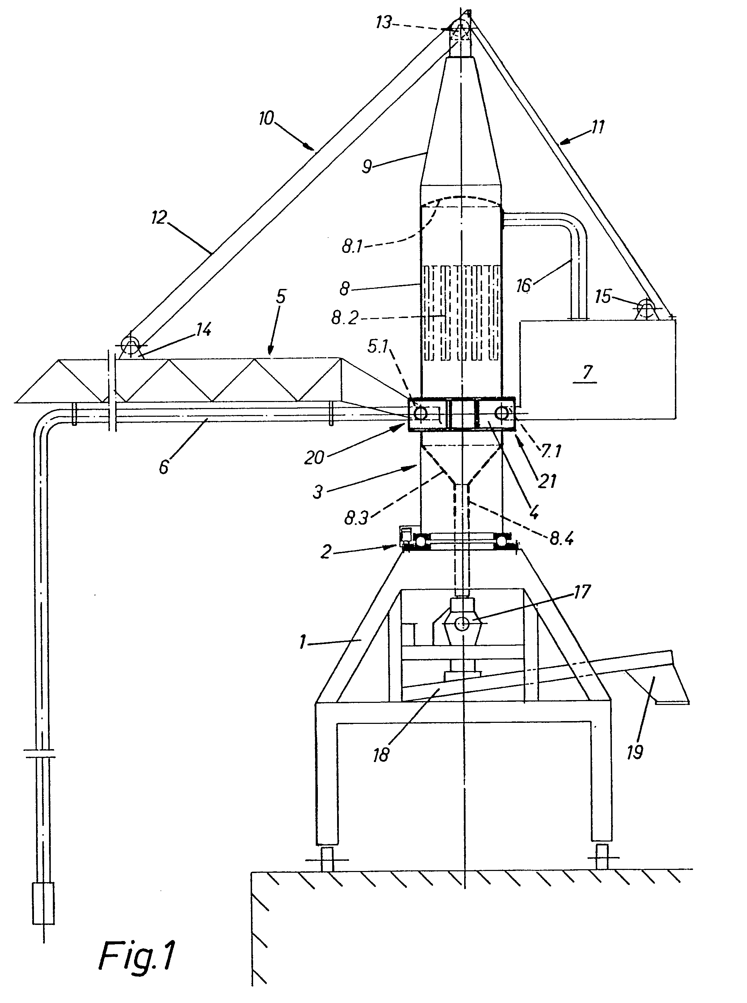

Der Saugheber gemäss Figur 1 besteht im wesentlichen aus einem längs einer Kaimauer verfahrbaren Portal 1 mit einem darauf mittels einer Kugeldrehverbindung 2 drehbar angeordneten, säulenförmigen Turm 3, an dem über ein Verbindungselement 4 auf der einen Seite ein Ausleger 5 mit Saugrohr 6 schwenkbar angelenkt und auf der gegenüberliegenden Seite ein Maschinenhaus 7 in der gleichzeitigen Funktion eines Gegengewichtes angelenkt ist.

Der Turm 3 besteht hauptsächlich aus einem als Rezipient für die zeitweise Aufnahme des über das Saugrohr 6 geförderten Schüttgutes dienenden Behälter 8 und einem sich senkrecht nach oben erstreckenden und sich kegelförmig verjüngenden Fortsatz 9, über den Zugmittel 10 für den Ausleger 5 und Abspannmittel 11 für das seinerseits nach Art eines Auslegers ausgebildete Maschinenhaus 7 geführt sind. Hierbei bestehen die Zugmittel 10 für den Ausleger 5 aus einem Seil 12, das in der Art eines Flaschenzuges über einen Rollenblock 13 an der Spitze des Turmes 3, das heisst auf dem Fortsatz 9, und einen Rollenblock 14 am Ausleger 5 zu einer an dem Maschinenhaus 7 angeordneten Umlenkrolle 15 für eine im Inneren des Maschinenhauses 7 befindliche Winde (nicht dargestellt) geführt ist. Als Abspannmittel 11 für das Maschinenhaus 7 dient ebenfalls ein Seil, das einerseits am Ende des Fortsatzes 9 und andererseits an dem Maschinenhaus 7 befestigt ist und dieses in waagerechter Lage hält.

Als zentraler Bestandteil des Turmes 3 ist der im Betrieb unter Unterdruck stehende Behälter 8 anzusehen, dessen oberer Abschlussdeckel 8.1 wie die übliche Filtereinrichtung 8.2 und der Auslauftrichter 8.3 für das geförderte Gut mit anschliessendem Fallrohr 8.4 gestrichelt dargestellt sind. Die Unterdruckerzeugung für die pneumatische Förderung durch das Saugrohr 6 geschieht durch ein im Maschinenhaus 7 untergebrachtes Sauggebläse (nicht dargestellt), das über eine Rohrleitung 16 mit dem oberen Bereich des Behälters 8 in Verbindung steht. Während sich Staub und kleinere Verunreinigungen des Gutes in der Filtereinrichtung 8.2 fangen, gelangt das geförderte Gut über den Auslauftrichter 8.3 und das Fallrohr 8.4 in kontinuierlichem Strom zu einer das Eindringen von Falschluft in den Behälter 8 vermeidenden Zellenradschleuse 17, aus der es über einen Austragsstutzen auf einen Abförderer 18 gelangt und über eine Auslaufschurre 19 einem Behälter für den Abtransport, zum Beispiel einem Lastkraftwagen oder einem Eisenbahnwaggon, aufgegeben wird.

Aus dem Gesamtaufbau gemäss Figur 1 ist erkennbar, dass innerhalb des Verbindungselementes 4 Anlenkpunkte 20, 21 für den Ausleger 5 und das Maschinenhaus 7 vorgesehen sind, die in ein und derselben waagerechten Ebene liegen, wodurch sich alle aus dem Ausleger 5 und dem Maschinenhaus 7 resultierenden Horizontalkräfte in dieser Ebene bzw. in dem Verbindungselement 4 neutralisieren. Es ist ferner ersichtlich, dass infolge der Führung der Zug- und Abspannmittel 10, 11 für den Ausleger 5 und das Maschinenhaus 7 über die Spitze des Turmes 3 die hier wirkenden Vertikalkräfte über den kegelförmigen Fortsatz 9 in gleichmässiger Verteilung in die Wandung des Behälters 8 eingeleitet und gemeinsam mit den an den Anlenkpunkten 20, 21 des Verbindungselementes 4 wirksamen Vertikalkräften über den unteren, nicht mehr im Unterdruckbereich liegenden Teil der Behälterwandung auf die Kugeldrehverbindung 2 und damit auf das Portal 1 abgesetzt werden.

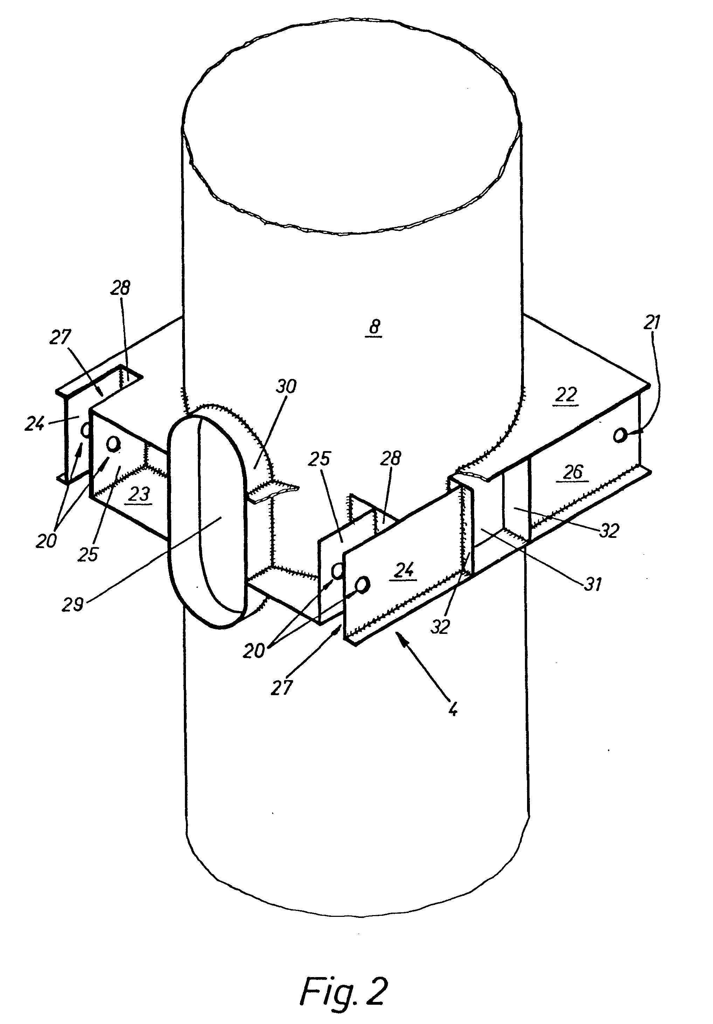

Hinsichtlich des in Figur 2 in seinen Einzelheiten dargestellten Verbindungselementes 4 ist davon auszugehen, dass der Ausleger 5 in einem weiten Bereich heb- und senkbar sein muss, während das Maschinenhaus 7 im wesentlichen nur in waagerechter Lage verbleibt. Daraus resultiert eine unterschiedliche Gestaltung der Anlenkpunkte 20 für den Ausleger 5 und derjenigen (21) für das Maschinenhaus 7. Ferner ist die konstruktive Durchbildung der Anlenkenden des Auslegers 5 und des Maschinenhauses 7 im Rahmen der vorliegenden Anmeldung von sekundärer Bedeutung, so dass mehr oder weniger einfache Anlenkaugen 5.1, 7.1 zugrundegelegt werden können, wie sie in Figur 1 angedeutet sind, und von denen Ausleger und Maschinenhaus jeweils zwei Stück aufweisen. Zur Erleichterung der Montage können diese Anlenkaugen teilbar ausgeführt sein.

Im einzelnen besteht das Verbindungselement 4 im wesentlichen aus zwei durch Durchtrittsöffnungen für den Behälter 8 versehenen rechteckigen Platten 22, 23, die längs der Durchtrittsöffnungen mit der Wand des Behälters 8 verschweisst sind sowie aus zwischen diesen Platten eingeschweissten Stegblechen 24, 25, 26. Im Bereich der in der Figur vorderen Ecke ist die obere Platte 22 teilweise ausgebrochen dargestellt. Zur Bildung der Anlenkpunkte 20 für den Ausleger, die hier vereinfacht als Bohrungen zur Aufnahme von Lagerbolzen dargestellt sind, sind zwischen den Platten 22, 23 zwei äussere Stegbleche 24 und zwei innere Stegbleche 25 eingeschweisst, wobei für einen Anlenkpunkt 20 jeweils ein äusseres Stegblech 24 und ein inneres Stegblech 25 vorgesehen sind. Zur Ermöglichung einer weitgehend freien Schwenkbewegung des in Figur 2 nicht dargestellten Auslegers nach oben und unten um die Anlenkpunkte 20 sind die Platten 22, 23 im Bereich der Stegbleche 24, 25 mit Aussparungen 27 versehen. Insgesamt bilden die Stegbleche 24, 25 somit mit den Plattenrändern und weiteren hinteren, mit der Behälterwandung verschweissten Querstegen 28 von oben nach unten durchgehende Schächte für die Aufnahme der Auslegerenden. Für die Anlenkung des Maschinenhauses ist aufgrund der hier nicht stattfindenden Auslenkbewegung nach oben oder unten eine einfachere Gestaltung der Anlenkpunkte 21 ausreichend. Prinzipiell genügen hierfür Bohrungen in den Stegblechen 26, wenngleich natürlich ähnliche Lösungen wie mit den zusätzlichen inneren Stegblechen 25 auf der Auslegerseite möglich sind. Irgendwelcher Aussparungen in den Platten 22, 23 bedarf es indessen wegenn der entfallenden Schwenkbeweglichkeit des Maschinenhauses nicht.

Weiterhin ist im Bereich zwischen den Anlenkpunkten 20 für den Ausleger die Eintrittsöffnung 29 für das Saugrohr 6 in das Verbindungselement 4 integriert. Zu diesem Zweck ist ein Rohrstutzen 30 mit einer entsprechenden Aussparung der Wandung des Behälters 8 auf dem gesamten Umfang dieser Aussparung verschweisst. Zusätzlich durchdringt der Rohrstutzen die Randbereiche der Platten 22, 23 und ist an den Durchstossstellen mit diesen ebenfalls fest durch Schweissung verbunden. Die ovale Form des Rohrstutzens gewährleistet hierbei eine ausreichende Beweglichkeit des mit dem Ausleger 5 in vertikaler Richtung schwenkbaren Saugrohres 6. Neben dieser kräftemässigen Einbindung der Eintrittsöffnung 29 über den Rohrstutzen 30 in das Verbindungselement 4 erfolgt eine solche auch hinsichtlich der Druckentlastungsöffnungen 31, die aus Symmetrie- bzw. Gleichgewichtsgründen zu beiden Seiten des Behälters erforderlich sind und — normalerweise durch Einsätze bzw. Klappen verschlossen — bei einer Staubexplosion oder Verpuffung im Inneren des Behälters den Austritt der Explosionsdruckwelle ins Freie unter Freigabe der Einsätze bzw. Klappen gewährleisten und somit schwerwiegende Beschädigungen des Behälters verhindern. Es leuchtet ein, dass für diese Druckentlastungsöffnungen eine stabile Umrahmung von grossem Vorteil ist, wie sie durch die Platten 22, 23 des Verbindungselementes 4 teilweise vorgegeben ist. Während die in der Wandung des Behälters vorgesehenen Druckentlastungsöffnungen 31 oben und unten durch die Randbereiche der Platten 22, 23 abgeschlossen sind und durch diese verstärkt werden, sind die Öffnungen 31 an ihren Seiten von Verbindungsstegen 32 eingerahmt, die mit der Wandung des Behälters 8 sowie den Platten 22, 23 verschweisst sind und mit diesen nach aussen bündig abschliessen. Darüber hinaus ist jeder dieser Verbindungsstege noch mit dem ihm nächstgelegenen Stegblech fest verbunden, vorzugsweise verschweisst, was eine zusätzliche, im Falle einer Staubexplosion oder Verpuffung sehr erwünschte Fixierung der Verbindungsstege 32 bedeutet. Naturgemäss kann die Verbindung zwischen den Stegblechen und den Verbindungsstegen in verschiedener Weise ausgeführt sein. Im dargestellten Ausführungsbeispiel sind die äusseren Stegbleche 24 einfach bis zu den vorderen Verbindungsstegen 32 verlängert und die Stegbleche 26 bis zu den hinteren Verbindungsstegen, woraus sich ein besonders einfacher, übersichtlicher Aufbau ergibt.

Im übrigen kann das Verbindungselement 4, zum Beispiel bei Grossanlagen, auch aus mehr als zwei Platten 22, 23 unter entsprechender Vervielfachung bzw. Modifikation der Stegbleche 24, 25, 26 und Querstege 28 sowie zweckentsprechend gestalteter Lage der Anlenkpunkte 20, 21 aufgebaut sein.

Ferner kann das Verbindungselement, vorzugsweise bei kleineren Anlagen, auch aus einer Behälterzone von gegenüber der übrigen Wandung des Behälters 8 erhöhter Wandstärke gebildet sein. Hierbei wären zweckgerecht gestaltete, an diese Behälterzone angeschweisste Stegbleche zur Aufnahme der Anlenkpunkte 20, 21 vorzusehen, wobei aufgrund der grösseren Wandstärke die Eintrittsöffnung 29 für das Saugrohr sowie die Druckentlastungsöffnungen 31 im wesentlichen ohne gesonderte Verstärkung in ihren Randbereichen ausgeführt werden könnten.

*Bezugszeichenliste*

| 1 | Portal |
| 2 | Kugeldrehverbindung |
| 3 | Turm |
| 4 | Verbindungselement |
| 5 | Ausleger |
| 5.1 | Anlenkauge |
| 6 | Saugrohr |
| 7 | Maschinenhaus |
| 7.1 | Anlenkauge |
| 8 | Behälter |
| 8.1 | Abschlussdeckel |
| 8.2 | Filtereinrichtung |
| 8.3 | Auslauftrichter |
| 8.4 | Fallrohr |
| 9 | Fortsatz |
| 10 | Zugmittel |
| 11 | Abspannmittel |
| 12 | Seil |
| 13 | Rollenblock |
| 14 | Rollenblock |
| 15 | Umlenkrolle |
| 16 | Rohrleitung |
| 17 | Zellenradschleuse |
| 18 | Abförderer |
| 19 | Auslaufschurre |
| 20 | Anlenkpunkt für Ausleger |
| 21 | Anlenkpunkt für Maschinenhaus |
| 22 | Platte |
| 23 | Platte |
| 24 | Stegblech |
| 25 | Stegblech |
| 26 | Stegblech |
| 27 | Aussparung |
| 28 | Quersteg |
| 29 | Eintrittsöffnung |
| 30 | Rohrstutzen |
| 31 | Druckentlastungsöffnung |
| 32 | Verbindungssteg |

**Patentansprüche**

1. Saugheber für den Umschlag von Schüttgütern, insbesondere zur Entladung von Schiffen, mit einem an einem Tragwerk in lotrechter Ebene schwenkbar gelagerten, durch Zugmittel (10) geführten Ausleger (5) mit einem Saugrohr (6) und einem um seine Längsachse drehbar gelagerten, vorzugsweise zylindrischen Behälter (8) für die zeitweise Aufnahme des Schüttgutes, wobei der Behälter vermittels mit ihm verbundener Krafteinleitungselemente (4) gleichzeitig Tragwerk für den Ausleger und ein an der diesem abgewandten Seite des Behälters angeordnetes Maschinenhaus (7) als Gegengewicht ist, dadurch gekennzeichnet, dass die Krafteinleitungselemente mit einem einzigen, in einem senkrechten Teilbereich die Wandung des Behälters (8) auf ihrem gesamten Umfang einbeziehenden Verbindungselement (4) zusammengefasst ist, bei dem die Anlenkpunkte (20, 21) für den Ausleger (5) und das seinerseits nach Art eines Auslegers ausgebildete Maschinenhaus (7) in ein und derselben waagerechten Ebene liegen und die Zugmittel (10) für den Ausleger (5) sowie Abspannmittel (11) für das Maschinenhaus (7) über einen sich senkrecht nach oben erstreckenden Fortsatz (9) des Behälters (8) geführt sind.

2. Saugheber nach Anspruch 1, dadurch gekennzeichnet, dass in das Verbindungselement (4) im Bereich zwischen den Anlenkpunkten (20) für den Ausleger (5) eine Eintrittsöffnung (29) für das Saugrohr (6) und in die seitlichen Bereiche zwischen den jeweils einander gegenüberliegenden Anlenkpunkten (20, 21) für den Ausleger (5) und das Maschinenhaus (7) je eine Druckentlastungsöffnung (31) für den Behälter (8) integriert sind.

3. Saugheber nach Anspruch 1 oder 2, dadurch gekennzeichnet, dass das Verbindungselement (4) aus mindestens zwei zueinander parallelen, mit Durchtrittsöffnungen für den Behälter (8) versehenen und längs derselben mit der Behälterwandung verschweissten, vorzugsweise rechteckigen Platten (22, 23) besteht, zwischen die im Bereich ihrer Ecken Stegbleche (24, 25, 26) zur Aufnahme der Anlenkpunkte (20, 21) für den Ausleger (5) und das Maschinenhaus (7) eingeschweisst sind.

4. Saugheber nach Anspruch 3, dadurch gekennzeichnet, dass für jeden Anlenkpunkt (20) des Auslegers (5) zwei zueinander parallele Stegbleche (24, 25) unter Belassung durch sie begrenzter, auslegerseitig offener Aussparungen (27) in den Platten (22, 23) vorgesehen sind.

5. Saugheber nach Anspruch 4, dadurch gekennzeichnet, dass die Stegbleche (24, 25) an ihrem dem Ausleger (5) abgewandten Enden mit einem Quersteg (28) verschweisst sind, der seinerseits mit den Platten (22, 23) und der Wandung des Behälters (8) verschweisst ist.

6. Saugheber nach Anspruch 2 und 3, dadurch gekennzeichnet, dass die Eintrittsöffnung (29) für das Saugrohr (6) als die Randbereiche der Platten (22, 23) durchdringender und mit diesen sowie der eine entsprechende Aussparung aufweisenden Behälterwandung verschweisster Rohrstutzen (30) ausgebildet ist.

7. Saugheber nach Anspruch 6, dadurch gekennzeichnet, dass der Rohrstutzen (30) einen ovalen Querschnitt aufweist, dessen Längsausdehnung sich in senkrechter Richtung erstreckt.

8. Saugheber nach Anspruch 2 und 3, dadurch gekennzeichnet, dass die Druckentlastungsöffnungen (31) für den Behälter (8) durch entsprechende Aussparungen der Behälterwandung einrahmende, mit dieser sowie den Platten (22, 23) verschweisste Verbindungsstege (32) und die diese überdeckenden Randbereiche der Platten (22, 23) gebildet sind.

9. Saugheber nach Anspruch 8, dadurch gekennzeichnet, dass jeder Verbindungssteg (32) zusätzlich mit mindestens einem Stegblech (24, 25, 26) des ihm nächstgelegenen Anlenkpunktes (20, 21) unmittelbar fest verbunden ist.

10. Saugheber nach Anspruch 9, dadurch gekennzeichnet, dass die zusätzliche unmittelbare feste Verbindung durch die zu diesem Zweck entsprechend verlängerten äusseren Stegbleche (24, 26) selbst realisiert ist.

## Claims

1. Suction elevator for the transfer of bulk materials, particularly for unloading ships, with an arm (5) pivoted on a support in the vertical plane guided by means of tension (10), with a suction pipe (6) and a preferably cylindrical container (8) which can rotate around its longitudinal axis for the intermittend accommodation of the bulk material, where the container with the force application elements (4) connected to it are simultaneously the support for the arm and the counterweight for an engine house (7) situated on the far side of the container, characterised by the fact that the force application elements are collected in a single connecting element (4) including the wall of the container (8) on its entire circumference in a vertical part, where the connecting points (20, 21) for the arm (5) and the engine house (7) made as a kind of arm lie in the same horizontal plane and the means of tension (10) for the arm (5) and the means of staying (11) for the engine house (7) are taken over an extension (9) of the container (8) extending upwards.

2. Suction elevator according to Claim 1, characterised by the fact that an entry opening (29) for the suction pipe (6) into the connecting element (4) in the area between the connecting points (20) for the arm (5) and that a pressure release opening (31) for the container (8) is integrated in the side area between the opposite connecting points for arm (5) and the engine house (7).

3. Suction elevator according to Claim 1 or 2, characterised by the fact that the connecting element (4) consists of at least two parallel, preferably rectangular plates (22, 23) provided with opening for the container (8) and welded to it along the container wall, between which said plates web plates (24, 25, 26) for accommodating the connecting points (20, 21) for the arm (5) and the engine house (7) are welded, in the area of their corners.

4. Suction elevator according to Claim 3, characterised by the fact that two parallel web plates (24, 25) are provided for each connecting point (20) of arm (5), leaving open cut-outs (27) in plates (22, 23) on the arm side and limited by them.

5. Suction elevator according to Claim 4, characterised by the fact that the web plates (24, 25) are welded to a crossbar (28) at the ends away from the arm (5), which said crossbar in turn is welded to the plates (22, 23) and the wall of the container (8).

6. Suction elevator according to Claims 2 and 3, characterised by the fact that the entry opening (29) for the suction pipe (6) is made as a duct (30) passing through the edge areas of the plates (22, 23) and welded to them and to the container wall having a corresponding cut-out.

7. Suction elevator according to Claim 6, characterised by the fact that the duct (30) has an oval cross-section, whose longitudinal extension is in the vertical direction.

8. Suction elevator according to Claims 2 and 3, characterised by the fact that the pressure release opening (31) for the container (8) is formed by the connecting bars (32) framing the cut-outs of the container wall and welded to the latter and to the plates (22, 23) and by the edge areas of plates (22, 23) covering these.

9. Suction elevator according to Claim 8, characterised by the fact that each connecting bar (32) is additionally solidly connected to at least one web plate (24, 25, 26) of the nearest connecting point (20, 21).

10. Suction elevator according to Claim 9, characterised by the fact that the additional direct solid connection is produced for this purpose by suitably extended outer web plates (24, 26).

**Revendications**

1. Elévateur à succion pour le transbordement de matières en vrac, notamment pour le déchargement des navires, qui comprend une flèche (5) guidée par des dispositifs de traction (10) et montée sur un support de manière à pouvoir pivoter dans un plan vertical, qui comporte un tube de succion (6) et un récipient (8), de préférence cylindrique et monté de manière à pouvoir tourner autour de son axe longitudinal, qui reçoit temporairement les matières en vrac, ce récipient constituant en même temps, du fait de son association avec des éléments (4) de transmission des efforts, un support pour la flèche et pour une cabine à machines (7) située du côté du récipient qui se trouve à l'opposé de la flèche et faisant fonction de contrepoids, caractérisé en ce que les éléments de transmission des efforts sont groupés en un seul élément de liaison (4) qui englobe, dans une de ses parties, verticale, la paroi du récipient (8) et dans lequel les points d'articulation (20, 21) de la flèche (5) et de la cabine à machines (7), constituée comme une flèche, se trouvent dans un seul et même plan horizontal et en ce que les dispositifs de traction (10) de la flèche (5) et les dispositifs de suspension (11) de la cabine à machines (7) passent par le prolongement (9) du récipient (8) orientée verticalement vers le haut.

2. Elévateur à succion selon la revendication 1, caractérisé en ce que l'élément de liaison (4) comporte, dans sa zone comprise entre les points d'articulation (20) de la flèche (5), une ouverture d'entrée (29) pour le tube de succion (6) et, dans les zones latérales comprises entre les points d'articulation (20, 21) opposés l'un à l'autre, de la flèche (5) et de la cabine à machines (7), des ouvertures (31) de détente de la pression pour le récipient (8).

3. Elévateur à succion selon la revendication 1 ou 2, caractérisé en ce que l'élément de liaison (4) est constitué par au moins deux plaques (22, 23) parallèles, de préférence rectangulaires, qui comportent des ouvertures de passage pour le récipient (8) et sont soudées sur le pourtour de ces ouvertures à la paroi du récipient et entre lesquelles sont soudées, dans les zones de leurs coins, des éléments de tôle verticaux (24, 25, 26) contenant les points d'articulation (20, 21) de la flèche (5) et de la cabine à machines (7).

4. Elévateur à succion selon la revendication 3, caractérisé en ce que, pour chaque point d'articulation (20) de la flèche (5), il comporte deux éléments de tôle verticaux parallèles (24, 25) et des évidements (27) ménagés dans les plaques (22, 23), délimités par ces éléments et ouverts du côté de la flèche.

5. Elévateur à succion selon la revendication 4, caractérisé en ce que les éléments de tôle verticaux (24, 25) sont, à leurs extrémités situées à l'opposé de la flèche (5), soudés à un élément vertical transversal (28) qui, à son tour, est soudé aux plaques (22, 23) et à la paroi du récipient (8).

6. Elévateur à succion selon les revendications 2 et 3, caractérisé en ce que l'ouverture d'entrée (29) du tube de succion (6) est constituée par une tubulure (30) qui traverse les zones de bordure des plaques (22, 23) et est soudée à ces plaques et à la paroi du récipient comportant l'ouverture correspondante et présentant un évidement correspondant.

7. Elévateur à succion selon la revendication 6, caractérisé en ce que la tubulure (30) présente une section ovale dont l'extension longitudinale est orientée verticalement.

8. Elévateur à succion selon les revendications 2 et 3, caractérisé en ce que les ouvertures (31) qui assurent une détente de la pression dans le récipient (8) sont constituées par des éléments de tôle de liaison verticaux (32), qui encadrent les évidements correspondants ménagés dans la paroi du récipient et sont soudés à cette paroi et aux plaques (22, 23), et par les zones de bordure des plaques (22, 23) qui les recouvrent.

9. Elévateur à succion selon la revendication 8, caractérisé en ce que chaque élément de tôle de liaison vertical (32) est, de plus, relié solidement à au moins un élément de tôle vertical (24, 25, 26) du point d'articulation (20, 21) les plus proche.

10. Elévateur à succion selon la revendication 9, caractérisé en ce que la liaison solide directe supplémentaire est réalisée par les éléments de tôle verticaux (24, 26) prolongés suffisamment à cet effet.

*Fig.1*

Fig. 2